# EUROPÄISCHE PATENTSCHRIFT

(11) **EP 2 606 224 B1**
(45) Veröffentlichungstag und Bekanntmachung des Hinweises auf die Patenterteilung: **14.05.2014**
(21) Anmeldenummer: 11738971.8
(22) Anmeldetag: 28.07.2011
(51) Int. Cl.: F03B 13/18, F15B 7/00

(54) **HYDROSTATISCHER ENERGIEWANDLER**
HYDROSTATIC ENERGY CONVERTER
CONVERTISSEUR D'ÉNERGIE HYDROSTATIQUE

(30) Priorität: 21.08.2010 DE 102010035059
(43) Veröffentlichungstag der Anmeldung: 26.06.2013
(73) Patentinhaber: Robert Bosch GmbH, 70469 Stuttgart (DE)
(72) Erfinder: LANGENSTEIN, Christian, 63846 Laufach (DE); WIRZBERGER, Franz, 97843 Neuhütten (DE); BRENDLER, Wolfgang, 97854 Steinfeld (DE)
(74) Vertreter: Wiesmann, Stephan
(86) Internationale Anmeldenummer: PCT/EP2011/003784
(87) Internationale Veröffentlichungsnummer: WO 2012/025183

(56) Entgegenhaltungen:
- WO-A2-2010/043987
- DE-A1-102007 056 400
- US-B1- 6 476 511
- US-B1- 7 448 210

## Beschreibung

Die Erfindung betrifft einen hydrostatischen Energiewandler zur Wandlung von oszillierender Bewegungsenergie in Rotationsenergie gemäß dem Oberbegriff des Patentanspruchs 1.

Bei hydrostatischen Energiewandlern zur Wandlung von oszillierender Bewegung - insbesondere von Wellenenergie - in Rotationsenergie gibt es verschiedene Ansätze zur Erzeugung von Energie eines Druckmittels über Linearpumpen.

In der Druckschrift DE 10 2007 056 400 A1 ist ein derartiger hydrostatischer Energiewandler gezeigt, dessen Linearpumpe von einem Gleichgangzylinder gebildet ist.

Nachteilig an derartigen hydrostatischen Energiewandlern sind der für den Gleichgangzylinder benötigte Bauraum und das nicht veränderbare Schluckvolumen der Linearpumpe.

Dokument US 6 476 511 B1 offenbart einen hydrostatischen Energiewandler nach dem Oberbegriff des Anspruchs 1.

Dem gegenüber liegt der Erfindung die Aufgabe zu Grunde, einen alternativen hydrostatischen Energiewandler zu schaffen.

Diese Aufgabe wird gelöst durch einen hydrostatischen Energiewandler mit den Merkmalen des Patentanspruchs 1.

Bei dem erfindungsgemäßen hydrostatischen Energiewandler zur Wandlung von oszillierender Bewegungsenergie eines Koppelpunktes in Rotationsenergie sind an den Koppelpunkt zwei Differenzialzylinder gekoppelt. Diese wirken als Linearpumpen und benötigen weniger Bauraum als der Gleichgangzylinder gemäß dem Stand der Technik.

Der erfindungsgemäße hydrostatische Energiewandler hat zwei Differenzialzylinder, die jeweils einen Ringraum und einen Bodenraum haben. Dabei sind Wirkrichtungen oder Kolbenstangen der Differenzialzylinder gegeneinander gerichtet. Damit werden keine Quer- oder Torsionskräfte in den Energiewandler eingeleitet, so dass sein Wirkungsgrad verbessert und sein vorrichtungstechnischer Aufwand verringert ist. Weiterhin ergeben sich drei wählbare Betriebszustände des erfindungsgemäßen hydrostatischen Energiewandlers, nämlich die beiden Ringflächen oder die beiden Bodenflächen oder eine Kombination aus den beiden Ring- und den beiden Bodenflächen.

Da die beiden Ringräume an einen ersten Hydromotor angeschlossen sind, und die beiden Bodenräume an einen zweiten Hydromotor angeschlossen sind, entstehen immer gleiche Volumenströme zwischen den Räumen.

Weitere vorteilhafte Ausgestaltungen der Erfindung sind in den abhängigen Patentansprüchen beschrieben.

Wenn der erste oder der zweite Hydromotor ein Verstellmotor ist, kann dieser in einen Standby-Modus geschaltet werden, in dem sein Schwenkwinkel maximal eingestellt wird. Wenn beide Hydromotoren Verstellmotoren sind, ist eine stoßfreie Umschaltung zwischen den drei Betriebszuständen (nur Ringflächen, nur Bodenflächen, Ring- und Bodenflächen) auch innerhalb eines Arbeitszyklus möglich.

Wenn der Verstellmotor durchschwenkbar ist, kann die Drehrichtung seines Abtriebs trotz systembedingter zyklischer Umkehr der Förderrichtung beibehalten werden.

Bei einer bevorzugten Weiterbildung ist von den beiden Hydromotoren über je eine Abtriebswelle je ein Generator antreibbar. Diese sind unabhängig voneinander einstellbar und optimierbar.

Bei einer anderen vorrichtungstechnisch vereinfachten Weiterbildung ist ein gemeinsamer Generator von den beiden Hydromotoren über eine gemeinsame Abtriebswelle antreibbar.

Dabei kann zum Abkoppeln einer der beiden Hydromotoren eine Kupplung vorgesehen sein, die an der gemeinsamen Abtriebswelle zwischen den beiden Hydromotoren angeordnet ist.

Bei einer bevorzugten Weiterbildung des erfindungsgemäßen Energiewandlers ist hydraulisch betrachtet parallel zum ersten oder zweiten Hydromotor eine absperrbare Bypassleitung vorgesehen. Diese verbindet die beiden Ringräume bzw. die beiden Bodenräume. Bei geöffneter Bypassleitung ist eine Minimierung von Verlusten des zugeordneten nicht im Einsatz befindlichen Hydromotors möglich.

Wenn die Bypassleitung an eine Drucksenke, z.B. an einen Tank, angeschlossen ist, und dabei zwischen der Drucksenke und den beiden Anschlüssen des Hydromotors jeweils ein Absperrventil angeordnet ist, können Schäden vermeiden werden, da Druckmittel zur Drucksenke abströmen kann.

Bei einem bevorzugten Anwendungsfall ist der Koppelpunkt des erfindungsgemäßen Energiewandlers über einen Hebelarm mit einem - vorzugsweise flächigen Widerstandselement - einer Wellenergieanlage nach dem Terminator-Prinzip gekoppelt. Bei diesem Anwendungsfall entsteht oszillierende regenerative Energie, die mit dem erfindungsgemäßen Energiewandler in elektrische Energie wandelbar ist.

Bei anderen bevorzugten Anwendungsfällen ist der Koppelpunkt mit einer Wellenergieanlage vom Typ Multi Point Absorber oder mit einem Auftriebskörper - insbesondere mit einer Schwimmboje - einer Wellenenergieanlage gekoppelt. Auch bei diesen Anwendungsfällen entsteht oszillierende regenerative Energie, die mit dem erfindungsgemäßen Energiewandler in elektrische Energie wandelbar ist.

Im Folgenden werden anhand der Figuren verschiede Ausführungsbeispiele der Erfindung detailliert beschrieben. Es zeigen:
Figur 1 ein hydraulisches Schaltbild eines ersten Ausführungsbeispiels eines erfindungsgemäßen hydrostatischen Energiewandlers;
Figur 2 ein hydraulisches Schaltbild eines zweiten Ausführungsbeispiels eines erfindungsgemäßen hydrostatischen Energiewandlers;
Figur 3 ein hydraulisches Schaltbild eines dritten Ausführungsbeispiels eines erfindungsgemäßen hydrostatischen Energiewandlers;
Figur 4 ein hydraulisches Schaltbild eines vierten Ausführungsbeispiels eines erfindungsgemäßen hydrostatischen Energiewandlers; und
Figur 5 eine schematische Darstellung eines Teils eines erfindungsgemäßen hydrostatischen Energiewandlers (gemäß einem der vorhergehenden Figuren) mit einer Wellenenergieanlage vom Typ Multi Point Absorber.

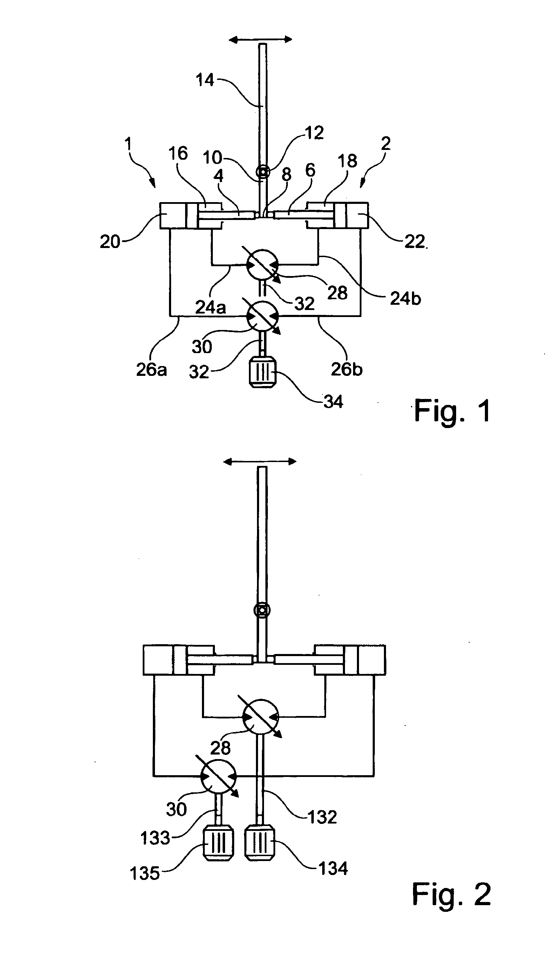

Figur 1 zeigt ein hydraulisches Schaltbild eines ersten Ausführungsbeispiels eines erfindungsgemäßen hydrostatischen Energiewandlers als Teil einer Wellenenergieanlage. Der Energiewandler hat zwei Differenzialzylinder 1, 2, deren Kolbenstangen 4, 6 auf einer gemeinsamen (nicht gezeigten) Wirklinie liegen und gegeneinander gerichtet sind. An einem vom jeweiligen Differenzialzylinder 1, 2 abgewandten Endabschnitt haben die beiden Kolbenstangen 4, 6 einen gemeinsamen Koppelpunkt 8. Am Koppelpunkt 8 ist ein Hebelarm 10 angelenkt, der um ein Schwenkgelenk 12 schwenkbar ist.

Auf der dem Hebelarm 10 abgewandten Seite des Schwenkgelenks 12 ist ein flächiges Widerstandselement 14 angeordnet, das in Figur 1 in einer Seitenansicht gezeigt ist. Das Widerstandselement 14 und der Hebelarm 10 sind drehfest miteinander verbunden und gemeinsam unter der Oberfläche eines welligen Gewässers (insbesondere eines Meeres) angeordnet. Dabei sind das Widerstandselement 14 und der Hebelarm 10 in Figur 1 in einer mittleren Position gezeigt, um die herum sie auf Grund einer Orbitalbewegung der unter Wasser befindlichen Wasserteilchen eine oszillierende Schwenkbewegung ausführen (vgl. Doppelpfeil). Dabei nimmt das Widerstandselement 14 einen Teil der Bewegungsenergie der in der Nähe befindlichen Wasserteilchen auf und leitet sie über den Hebelarm 10 und über den Koppelpunkt 8 in die beiden Kolbenstangen 4, 6 der beiden Differenzialzylinder 1, 2 ein.

Jeder Differenzialzylinder hat einen Ringraum 16, 18 und einen Bodenraum 20, 22. Weiterhin hat das erste Ausführungsbeispiel des erfindungsgemäßen hydrostatischen Energiewandlers gemäß Figur 1 einen ersten Hydromotor 28, der über Arbeitsleitungen 24a, 24b mit den beiden Ringräumen 16, 18 verbunden ist. Weiterhin ist ein zweiter Hydromotor 30 vorgesehen, der über entsprechende Arbeitsleitungen 26a, 26b mit den Bodenräumen 20, 22 verbunden ist. Die beiden Hydromotoren 28, 30 sind als Verstellmotoren ausgeführt. Sie haben eine durchgehende gemeinsame Abtriebswelle 32, über die sie an einen Generator 34 gekoppelt sind.

Bei einer gemäß dem Wellengang des Gewässers oszillierenden Schwenkbewegung des flächigen Widerstandselementes 14 wird der Hebelarm 10 aus der in Figur 1 gezeigten mittleren Position abwechselnd zu den beiden Differenzialzylindern 1, 2 ausgelenkt. Dabei wird eine vorbestimmte Druckmittelmenge zwischen den beiden Ringräumen 16, 18 über die Arbeitsleitungen 24, 24b gefördert, während eine dem gegenüber größere Druckmittelmenge zwischen den beiden Bodenräumen 20, 22 über die Arbeitsleitungen 26a, 26b gefördert wird. Die Förderrichtung wechselt dabei gemäß der wechselnden Bewegungsrichtung des flächigen Widerstandselements 14 (vgl. Doppelpfeil). Somit wird der zweite Hydromotor 30 mit einem Schluckvolumenstrom beaufschlagt, der größer ist als derjenige des ersten Hydromotors 28. Dieser Unterschied wird durch unterschiedliche Baugrößen oder durch unterschiedlich eingestellte Schwenkwinkel der beiden Hydromotoren 28, 30 kompensiert. Die beiden Hydromotoren 28, 30 treiben über die gemeinsame Abtriebswelle 32 den Generator 34 zur Stromerzeugung an.

Figur 2 zeigt ein hydraulisches Schaltbild eines zweiten Ausführungsbeispiels eines erfindungsgemäßen hydrostatischen Energiewandlers als Teil einer Wellenenergieanlage. Dabei werden im Folgenden nur die Unterschiede zum ersten Ausführungsbeispiel gemäß Figur 1 erläutert. Die beiden Hydromotoren 28, 30 treiben unabhängig voneinander jeweils über eine Abtriebswelle 132, 133 einen Generator 134, 135 an. Diese sind unabhängig voneinander einstellbar und optimierbar.

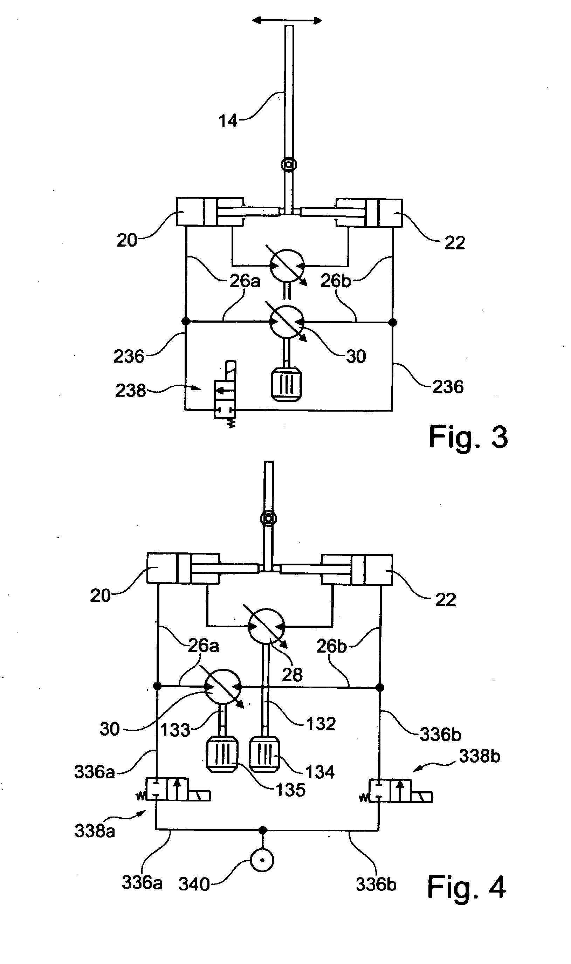

Figur 3 zeigt ein hydraulisches Schaltbild eines dritten Ausführungsbeispiels eines erfindungsgemäßen hydrostatischen Energiewandlers als Teil einer Wellenenergieanlage. Dabei werden im Folgenden nur die Unterschiede zum ersten Ausführungsbeispiel gemäß Figur 1 erläutert. Parallel zum zweiten Hydromotor 30 ist eine absperrbare Bypassleitung 236 vorgesehen. Sie ist einerseits an der Arbeitsleitung 26a angeschlossen, die den Bodenraum 20 mit der zweiten Hydromotor 30 verbindet, und sie ist andererseits an die Arbeitsleitung 26b angeschlossen, die den Bodenraum 22 mit dem zweiten Hydromotor 30 verbindet.

In der Bypassleitung 236 ist ein Absperrventil 238 vorgesehen, das in einer durch eine Feder vorgespannten Grundstellung die Bypassleitung 236 absperrt, und die in einer Schaltstellung die Bypassleitung 236 frei gibt. In der Schaltstellung des Absperrventils 236 sind die beiden Bodenräume 20, 22 und der zweite Hydromotor 30 im Wesentlichen druck- bzw. kraftlos geschaltet. Auf diese Weise kann das Widerstandsmoment bzw. die Widerstandskraft am flächigen Widerstandselement 14 deutlich reduziert werden. Dabei wird auch die im erfindungsgemäßen hydrostatischen Energiewandler gewandelte Energie deutlich reduziert.

Figur 4 zeigt ein hydraulisches Schaltbild eines vierten Ausführungsbeispiels eines erfindungsgemäßen hydrostatischen Energiewandlers als Teil einer teilweise abgebildeten Wellenenergieanlage. Die beiden Hydromotoren 28, 30, die beiden Abtriebswellen 132, 133 und die beiden Generatoren 134, 135 entsprechen denjenigen des zweiten Ausführungsbeispiel gemäß Figur 2.

Abweichend vom zweiten Ausführungsbeispiel gemäß Figur 2 ist parallel zum zweiten Hydromotor 30 über eine absperrbare Bypassleitung 336a, 336b eine Druckmittelsenke 340 angeschlossen. Dazu zweigt von der den Bodenraum 20 mit dem zweiten Hydromotor 30 verbindenden Arbeitsleitung 26a ein Abschnitte 336a der Bypassleitung ab, während von der den Bodenraum 22 mit dem zweiten Hydromotor 30 verbindenden Arbeitsleitung 26b ein Abschnitt336b der Bypassleitung abzweigt. Über beide Abschnitte 336a, 336b der Bypassleitung kann die zugeordnete Arbeitsleitung 26a, 26b über ein jeweiliges Absperrventil 338a, 338b zur Druckmittelsenke 340 entlastet werden.

Die beiden Absperrventile 338a, 338b sperren in einer durch eine Feder vorgespannten Grundstellung den jeweiligen Abschnitt 336a, 336b der Bypassleitung ab, während sie in einer jeweiligen Schaltstellung den jeweiligen Bodenraum 20, 22 mit der Druckmittelsenke 340 verbinden. Damit wird der zweite Hydromotor 30 und der zugeordnete Generator 135 deaktiviert, wobei Schäden im Hydrauliksystem vermieden werden. Die beiden Absperrventile 338a, 338b können auch dazu genutzt werden, eine lastfreie An- und Abkoppelung des zweiten Hydromotors 30 während des Betriebs der Wellenenergieanlage zu realisieren.

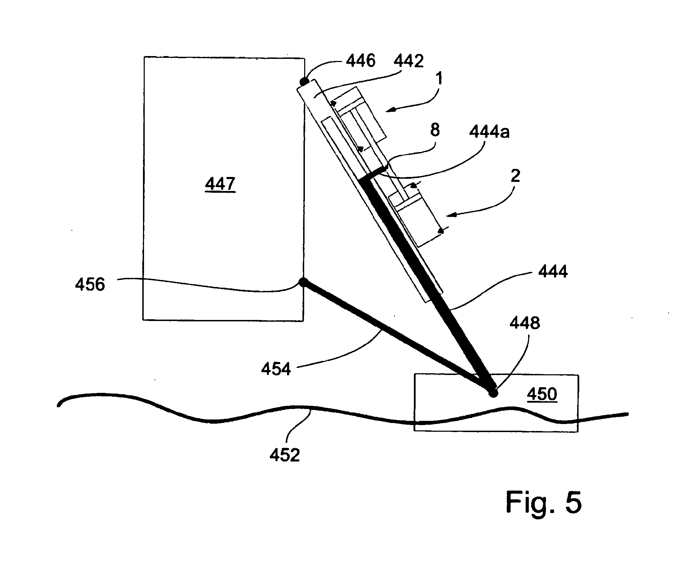

Figur 5 zeigt die beiden Differenzialzylinder 1, 2 eines erfindungsgemäßen hydrostatischen Energiewandlers gemäß einem der vorhergehenden Ausführungsbeispiele der von einer Wellenenergieanlage vom Typ Multi Point Absorber angetrieben wird.

Die beiden Differenzialzylinder 1, 2 sind parallel zu einem Außenrohr 442 angeordnet, in dem ein Innenrohr 444 abschnittsweise aufgenommen ist. Das Außenrohr 442 und das Innenrohr 444 bilden ein Schubgelenk, wobei parallel zu dessen Verschieberichtung die beiden Differenzialzylinder 1, 2 angeordnet sind. Der Koppelpunkt 8 des Energiewandlers ist über quer zur Verschieberichtung angeordnetes Verbindungsstück 444a mit dem Innenrohr 444 verbunden.

Das Außenrohr 442 ist über ein Schwenkgelenk 446 an einen ortsfesten Abschnitt 447 gekoppelt, während das Innenrohr 444 über ein Schwenkgelenk 448 an einen Auftriebskörper 450 gekoppelt ist. Der Auftriebskörper 450 schwimmt auf einer welligen Oberfläche 452 eines Meeres.

Weiterhin ist zwischen dem ortsfesten Abschnitt 447 und dem Auftriebskörper 450 eine Koppelstange 454 angeordnet, die über ein Schwenkgelenk 456 an den ortsfesten Abschnitt 447 und über das Schwenkgelenk 448 an den Auftriebskörper 450 gekoppelt ist.

Im Betrieb der gezeigten Wellenanlage und des Energiewandlers wird der Auftriebskörper 450 durch die wellige Oberfläche 452 in eine oszillierende Bewegung versetzt, die teilweise in eine Schubbewegung des Innenrohrs 444 relativ zum Außenrohr 442 überführt wird. Dadurch wird der Koppelpunkte 8 in eine oszillierende Bewegung überführt und von den beiden Differenzialzylindern 1, 2 in der oben beschriebenen Weise in hydraulische Energie gewandelt. Dabei sind alle vier zuvor beschriebenen Ausführungsbeispiele des erfindungsgemäßen hydraulischen Energiewandlers einsetzbar.

Bei allen gezeigten Ausführungsbeispielen können beide gezeigten Hydromotoren 28, 30 auch durchschwenkbar sein. Damit lässt sich die Drehrichtung trotz wechselnder Förderrichtung des Druckmittels in den Arbeitleitungen 24a, 24b bzw. 26a, 26b beibehalten.

Abweichend vom dritten und vierten Ausführungsbeispiel gemäß Figuren 3 und 4 kann auch der vom Druckmitteldurchsatz geringere erste Hydromotoren 28 deaktivierbar ausgeführt sein. Dazu werden die Ringräume 16, 18 der Differenzialzylinder 1, 2 über eine Bypassleitung verbunden oder zu einer Druckmittelsenke entlastet.

Abweichend von den Ausführungsbeispielen gemäß Figuren 1 bis 4 können die beiden Kolbenstangen 4, 6 einstückig gebildet sein.

Offenbart ist ein hydrostatischer Energiewandler zur Wandlung von oszillierender Bewegungsenergie eines Koppelpunktes in Rotationsenergie, wobei an den Koppelpunkt zwei als Linearpumpen wirkende Differenzialzylinder gekoppelt sind. Wirkrichtungen oder Kolbenstangen der beiden Zylinder sind gegeneinander gerichtet. Der Energiewandler kann in einer Wellenenergieanlage eingesetzt werden.

### Bezugszeichenliste

- 1: Differenzialzylinder
- 2: Differenzialzylinder
- 4: Kolbenstange
- 6: Kolbenstange
- 8: Koppelpunkt
- 10: Hebelarm
- 12: Schwenkgelenk
- 14: Widerstandselement
- 16: Ringraum
- 18: Ringraum
- 20: Bodenraum
- 22: Bodenraum
- 24a, 24b: Arbeitsleitung
- 26a, 26b: Arbeitsleitung
- 28: erster Hydromotor
- 30: zweiter Hydromotor
- 32; 132, 133: Abtriebswelle
- 34; 134, 135: Generator
- 236; 336a, 336b: Bypassleitung
- 238; 338a, 338b: Absperrventil
- 340: Druckmittelsenke
- 442: Außenrohr
- 444: Innenrohr
- 444a: Verbindungsstück
- 446: Schwenkgelenk
- 447: ortsfester Abschnitt
- 448: Schwenkgelenk
- 450: Auftriebskörper
- 452: Oberfläche
- 454: Koppelstange
- 456: Schwenkgelenk

## Patentansprüche

1. Hydrostatischer Energiewandler zur Wandlung von oszillierender Bewegungsenergie eines Koppelpunktes (8) in Rotationsenergie mit zwei an den Koppelpunkt gekoppelten und als Linearpumpen wirkenden Differenzialzylindern (1, 2), die jeweils einen Ringraum (16, 18) und einen Bodenraum (20, 22) haben, wobei Wirkrichtungen oder Kolbenstangen (4, 6) der Differenzialzylinder (1, 2) gegeneinander gerichtet sind,
**dadurch gekennzeichnet dass**
die beiden Ringräume (16, 18) an einen ersten Hydromotor (28) angeschlossen sind und die beiden Bodenräume (20, 22) an einen zweiten Hydromotor (30) angeschlossen sind.

2. Hydrostatischer Energiewandler nach Anspruch 1, wobei der erste oder der zweite Hydromotor ein Verstellmotor (28, 30) ist.

3. Hydrostatischer Energiewandler nach Anspruch 2, wobei der Verstellmotor durchschwenkbar ist.

4. Hydrostatischer Energiewandler nach Anspruch 1, wobei von den beiden Hydromotoren (28, 30) über jeweils eine Abtriebswelle (132, 133) jeweils ein Generator (134, 135) antreibbar ist.

5. Hydrostatischer Energiewandler nach Anspruch 1, wobei von den beiden Hydromotoren (28, 30) über eine gemeinsame Abtriebswelle (32) ein gemeinsamer Generator (34) antreibbar ist.

6. Hydrostatischer Energiewandler nach Anspruch 5 wobei die gemeinsame Abtriebswelle eine Kupplung aufweist, die zwischen den beiden Hydromotoren angeordnet ist.

7. Hydrostatischer Energiewandler nach Anspruch 1, wobei die beiden Ringräume über eine parallel zum ersten Hydromotor oder die beiden Bodenräume (20, 22) über eine parallel zum zweiten Hydromotor (30) angeordnete absperrbare Bypassleitung (236; 336a, 336b) miteinander verbunden sind.

8. Hydrostatischer Energiewandler nach Anspruch 7, wobei die Bypassleitung (336a, 336b) an eine Drucksenke (340) angeschlossen ist, und wobei zwischen der Drucksenke (340) und den beiden Anschlüssen des Hydromotors (30) jeweils ein Absperrventil (338a, 338b) angeordnet ist.

## Claims

1. Hydrostatic energy converter for the conversion of oscillating kinetic energy of a coupling point (8) into rotational energy, with two differential cylinders (1, 2) which are coupled to the coupling point and act as linear pumps which have in each case an annular space (16, 18) and a bottom space (20, 22), active directions or piston rods (4, 6) of the differential cylinders (1, 2) being directed opposite to one another, **characterized in that** the two annular spaces (16, 18) are connected to a first hydraulic motor (28), and the two bottom spaces (20, 22) are connected to a second hydraulic motor (30).

2. Hydrostatic energy converter according to Claim 1, the first or the second hydraulic motor being a variable-displacement motor (28, 30).

3. Hydrostatic energy converter according to Claim 2, the variable-displacement motor being fully pivotable.

4. Hydrostatic energy converter according to Claim 1, a generator (134, 135) being drivable by each of the two hydraulic motors (28, 30) in each case via an output shaft (132, 133).

5. Hydrostatic energy converter according to Claim 1, a common generator (34) being drivable by the two hydraulic motors (28, 30) via a common output shaft (32).

6. Hydrostatic energy converter according to Claim 5, the common output shaft having a coupling which is arranged between the two hydraulic motors.

7. Hydrostatic energy converter according to Claim 1, the two annular spaces being connected to one another via a shut-off bypass line (236; 336a, 336b) arranged parallel to the first hydraulic motor or the two bottom spaces (20, 22) being connected to one another via a shut-off bypass line (236; 336a, 336b) arranged parallel to the second hydraulic motor (30).

8. Hydrostatic energy converter according to Claim 7, the bypass line (336a, 336b) being connected to a pressure sink (340), and a shut-off valve (338a, 338b) being arranged between the pressure sink (340) and each of the two connections of the hydraulic motor (30).

## Revendications

1. Convertisseur d'énergie hydrostatique pour la conversion d'énergie de mouvement oscillatoire d'un point d'accouplement (8) en énergie de rotation, comprenant deux cylindres différentiels (1, 2) accouplés au point d'accouplement et agissant en tant que pompes linéaires, lesquels présentent chacun un espace annulaire (16, 18) et un espace de fond (20, 22), des directions d'action ou des tiges de piston (4, 6) des cylindres différentiels (1, 2) étant orientées à l'opposé l'une de l'autre,
**caractérisé en ce que**
les deux espaces annulaires (16, 18) sont raccordés à un premier moteur hydraulique (28) et les deux espaces de fond (20, 22) sont raccordés à un deuxième moteur hydraulique (30).

2. Convertisseur d'énergie hydrostatique selon la revendication 1, dans lequel le premier ou le deuxième moteur hydraulique est un moteur de réglage (28, 30).

3. Convertisseur d'énergie hydrostatique selon la revendication 2, dans lequel le moteur de réglage est pivotant.

4. Convertisseur d'énergie hydrostatique selon la revendication 1, dans lequel un générateur (134, 135) peut être entraîné à chaque fois par les deux moteurs hydrauliques (28, 30) par le biais d'un arbre de prise de force respectif (132, 133).

5. Convertisseur d'énergie hydrostatique selon la revendication 1, dans lequel un générateur commun (34) peut être entraîné par les deux moteurs hydrauliques (28, 30) par le biais d'un arbre de prise de force commun (32).

6. Convertisseur d'énergie hydrostatique selon la revendication 5, dans lequel l'arbre de prise de force commun présente un accouplement qui est disposé entre les deux moteurs hydrauliques.

7. Convertisseur d'énergie hydrostatique selon la revendication 1, dans lequel les deux espaces annulaires sont connectés l'un à l'autre par le biais d'une conduite de dérivation (236 ; 336a, 336b) pouvant être bloquée, disposée parallèlement au premier moteur hydraulique ou les deux espaces de fond (20, 22) peuvent être connectés l'un à l'autre par le biais d'une conduite de dérivation (236 ; 336a, 336b) pouvant être bloquée, disposée parallèlement au deuxième moteur hydraulique (30).

8. Convertisseur d'énergie hydrostatique selon la revendication 7, dans lequel la conduite de dérivation (336a, 336b) est raccordée à un puits de pression (340) et dans lequel entre le puits de pression (340) et les deux raccords du moteur hydraulique (30) est à chaque fois disposée une soupape d'arrêt (338a, 338b).
